# EUROPÄISCHE PATENTSCHRIFT

(11) **EP 0 917 971 B1**
(45) Veröffentlichungstag und Bekanntmachung des Hinweises auf die Patenterteilung: **22.06.2005**
(21) Anmeldenummer: 98890341.5
(22) Anmeldetag: 16.11.1998
(51) Int. Cl.: B60C 27/10

(54) **Seitenhalterung für eine Gleitschutzkette**
Lateral connector for antiskid chain
Connection latérale pour chaîne anti-patinage

(30) Priorität: 25.11.1997 AT 73597 U
(43) Veröffentlichungstag der Anmeldung: 26.05.1999
(73) Patentinhaber: Pewag Austria GmbH, 8021 Graz (AT)
(72) Erfinder: Manhal, Herbert, 8047 Graz (AT); Schuster, Theodor, 8312 Ottendorf (AT)
(74) Vertreter: Matschnig, Franz, Dipl.-Ing.

(56) Entgegenhaltungen:
- AT-B- 383 547
- DE-A- 2 731 296
- DE-A- 4 402 811
- US-A- 2 036 172

## Beschreibung

Die Erfindung betrifft eine Seitenhalterung für eine Reifenkette, bestehend aus einem Stahlseil, an dessen beiden Enden je ein Verschlußteil befestigt ist, wobei die Verschlußteile miteinander verhakbar sind, und das Stahlseil im verhakten Zustand zu einem an einer Seitenflanke eines Reifens liegenden Ring geschlossen ist, der erste Verschlußteil im wesentlichen um die Seele des Stahlseiles rotationssymmetrisch ausgebildet ist und daß der zweite Verschlußteil eine im wesentlichen um die Seele des Stahlseiles rotationssymmetrische sowie dem ersten Verschlußteil angepaßte Ausnehmung aufweist, die durch eine dem Längsschnitt des ersten Verschlußteiles entsprechend geformte Öffnung von außen zugänglich ist.

Bei derzeitigen Seitenhalterungen für eine Gleitschutzkette ist bei dem einen Verschlußteil an die Klemmhülse ein Haken aus Flachstahl und bei dem anderen Verschlußteil eine Öse aus Flachstahl angeschlossen. Dies hat den Nachteil, daß in der Praxis beim Anlegen der Gleitschutzkette oftmals das Stahlseil verdrillt wird, wodurch dieses bei der Fahrt größeren Belastungen als bei richtiger Montage der Gleitschutzkette ausgesetzt und somit stärkerem Verschleiß unterworfen ist.

Aus der AT 384 547 B ist eine Reifenkette mit einer Seitenhalterung der eingangs genannten Art bekannt geworden, bei welcher ein Verschlußteil als zylindrisch-kegeliger Nippel und der andere Verschlußteil als Hülse mit einer schlüssellochartigen Ausnehmung ausgebildet ist. Dabei müssen die beiden Seilenden zum Öffnen bzw. Schließen des Verschlusses unter einen Winkel von fast 90° gebracht werden, woraus sich eine mühsame Handhabung ergibt. Die Zylinderfläche des Nippels mit scharfkantigen Übergängen zum Seil bzw. einem Kegelabschnitt kann zu einer raschen Abnützung der Verschlußteile fuhren.

Aus der DE 27 31 296 **A1** ist eine Verbindung für die äußere Spannkette einer Schneekette nach dem Oberbegriff des Anspruchs 1 bekannt.

Eine Aufgabe der Erfindung liegt in der Schaffung einer Seitenhalterung für eine Reifenkette, welche bei einfachem Aufbau und bequemer Handhabung eine gute Anpassung an die Seitenfläche des Reifens ergibt. Dabei soll das Stahlseil nicht nur von Belastungen durch Verdrillen sondern auch durch Verkanten frei sein.

Diese Aufgabe wird mit einer Seitenhalterung der eingangs angegebenen Art dadurch erreicht, daß der erste Verschlußteil mit einem mit einer Klemmhülse verbundenen zylindrischen Ansatz und einem daran anschließenden Kugelkopf ausgebildet ist und die Ausnehmung in dem zweiten Verschlußteil einen dem Kugelkopf angepaßten sphärischen Boden aufweist.

Auf diese Weise schafft die Erfindung eine Seitenhalterung, bei der sich bei der Montage der Gleitschutzkette, aber auch während der Fahrt, die beiden Verschlußteile relativ zueinander verdrehen können, sodaß das Stahlseil nicht dauerhaft verdrillt werden kann, folglich keinen Belastungen durch Verdrillen unterworfen ist und eine längere Lebensdauer aufweist. Dank der Ausbildung eines Verschlußteils als Kugelkopf treten auch keine Verkantungskräfte bei zueinander abgewinkelten Seilenden auf.

Bei einer vorteilhaften weiterer Ausgestaltung der Erfindung weist die Ausnehmung eine Länge auf, die im wesentlichen dem um die Länge des zylindrischen Absatzes vermehrten Durchmesser des Kugelkopfes entspricht.

Es kann weiters zweckmäßig sein, wenn die Öffnung als Schlitz ausgebildet ist, der einen vom freien Ende des zweiten Verschlußteiles bis über den Boden hinausreichenden ersten Abschnitt, dessen Breite dem Durchmesser des Ansatzes entspricht und dessen Länge größer als die Länge des Ansatzes ist, und einen daran anschließenden zweiten Abschnitt aufweist, dessen Breite dem Durchmesser des Kugelkopfes angepaßt ist. Dies ergibt nicht nur ein sicheres Verhaken der Verschlußteile während der Fahrt, sondern auch eine besonders kurze Gesamtlänge der miteinander verbundenen Verschlußteile.

Dabei kann der zweite Abschnitt der Öffnung von außen betrachtet oval gestaltet sein, wodurch der zweite Verschlußteil an Festigkeit gewinnt.

Weiters kann die Ausnehmung teilweise von einer Schrägfläche begrenzt sein, die von der Seite der Klemmhülse sowie der Außenseite zum sphärischen Boden verläuft. Hierdurch wird das Einsetzen des ersten Verschlußteiles in die Ausnehmung erleichtert und außerdem eine größere Festigkeit des zweiten Verschlußteiles erzielt.

Ferner kann die Schrägfläche im Querschnitt entsprechend dem Durchmesser des Kugelkopfes konkav gekrümmt sein, was ebenfalls zur Steigerung der Festigkeit des zweiten Verschlußteiles beiträgt.

Von Vorteil ist schließlich, wenn der sphärische Boden mit einer reibungsarmen Auflage, vorzugsweise aus Polyethylenterephthalat versehen ist.

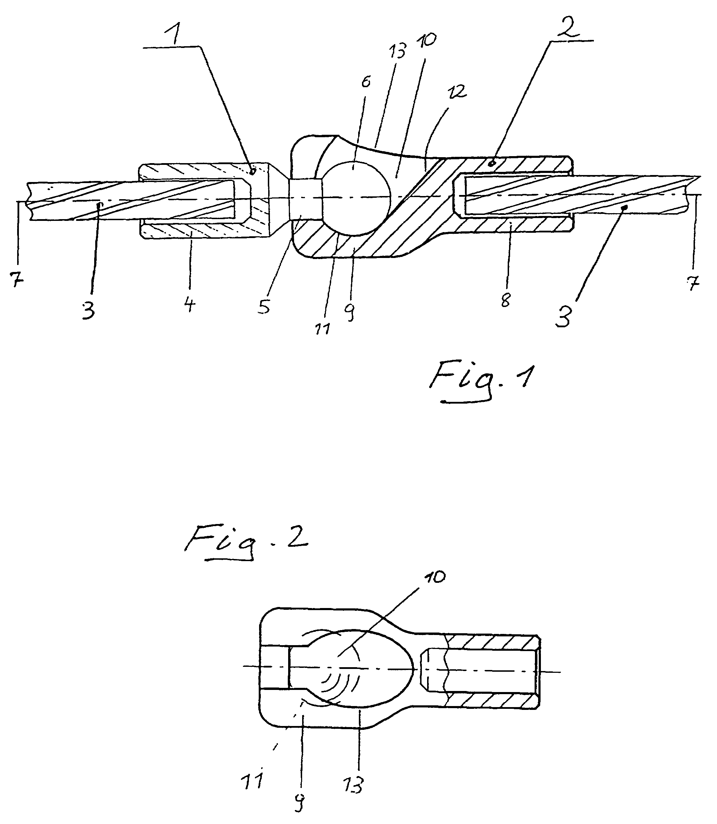

Die Erfindung wird im folgenden anhand eines bevorzugten Ausführungsbeispiels näher erläutert, das in den Zeichnungen dargestellt ist; es zeigen Fig. 1 einen Längsschnitt durch die miteinander verhakten Verschlußteile und Fig. 2 eine Draufsicht auf den zweiten Verschlußteil, teilweise im Schnitt, jeweils in größerem Maßstab.

Fig. 1 zeigt denjenigen Bereich der zu einem Ring geschlossenen Seitenhalterung für eine Gleitschutzkette, in dem die jeweils an einem der Enden eines Stahlseiles 3 befestigten Verschlußteile 1, 2 angeordnet sind; das übrige Stahlseil ist zur Vereinfachung nicht dargestellt.

Der erste Verschlußteil 1 besteht aus einer Klemmhülse 4, mit der er am Stahlseil 3 befestigt ist, und die einen zylindrischen Ansatz 5 trägt, an den ein Kugelkopf 6 anschließt. Der gesamte Verschlußteil 1 ist bezüglich der Seele 7 des Stahlseiles rotationssymmetrisch ausgebildet.

Der zweite Verschlußteil 2 weist ebenfalls eine Klemmhülse 8 zur Befestigung am Stahlseil 3 auf, die an ihrem freien Ende einen Pfannenteil 9 besitzt, der mit einer Ausnehmung 10 versehen ist. Diese Ausnehmung 10 ist ebenfalls bezüglich der Seele 7 des Stahlseiles 3 rotationssymmetrisch gestaltet und an ihrer dem ersten Verschlußteil 1 zugekehrten Seite von einem sphärischen Boden 11 begrenzt, der dem Kugelkopf 6 angepaßt ist, und zum Teil von einer von der Seite der Klemmhülse 8 sowie der Außenseite des Verschlußteiles 2 verlaufenden Schrägfläche 12 begrenzt, die im Querschnitt entsprechend dem Durchmesser des Kugelkopfes 6 konkav gekrümmt ist.

Die Ausnehmung 10 ist durch eine Öffnung 13 nach außen hin offen, die zum Einsetzen des ersten Verschlußteiles 1 dient und eine dem Längsschnitt des ersten Verschlußteiles 1 entsprechende Form besitzt. Sie weist einen ersten, vom freien Ende des Pfannenteiles 9 erstreckten Abschnitt auf, dessen Breite (Fig. 2) derjenigen des Ansatzes 5 entspricht und dessen Länge größer als diejenige des Ansatzes 9 ist, um ein sicheres Verhaken der beiden Verschlußteile 1, 2 zu gewährleisten. An diesen Abschnitt schließt der restliche Abschnitt der Öffnung 13 an, die von außen betrachtet ovale Form aufweist.

Zur Verbesserung der Möglichkeit der Relativdrehung der beiden Verschlußteile 1, 2 kann am Boden 11 der Ausnehmung 10 eine Einlage aus reibungsarmen Material, vorzugsweise aus Polyethylenterephthalat, vorgesehen sein.

Die Verschlußteile 1, 2 bestehen vorzugsweise aus geschmiedetem Aluminium und werden zur Befestigung am Stahlseil 3 auf dasselbe aufgepreßt.

## Patentansprüche

1. Seitenhalterung für eine Reifenkette, bestehend aus einem Stahlseil (3), an dessen beiden Enden je ein Verschlußteil (1, 2) befestigt ist, wobei die Verschlußteile miteinander verhakbar sind, und das Stahlseil im verhakten Zustand zu einem an einer Seitenflanke eines Reifens liegenden Ring geschlossen ist, der erste Verschlußteil (1) im wesentlichen um die Seele (7) des Stahlseiles (3) rotationssymmetrisch ausgebildet ist und der zweite Verschlußteil (2) eine im wesentlichen um die Seele (7) des Stahlseiles (3) rotationssymmetrische sowie dem ersten Verschlußteil (1) angepaßte Ausnehmung (10) aufweist, die durch eine dem Längsschnitt des ersten Verschlußteiles (1) entsprechend geformte Öffnung (13) von außen zugänglich ist, **dadurch gekennzeichnet, daß** der erste Verschlußteil (1) mit einem mit einer Klemmhülse (4) verbundenen zylindrischen Ansatz (5) und einem daran anschließenden Kugelkopf (6) ausgebildet ist und die Ausnehmung (10) in dem zweiten Verschlußteil (2) einen dem Kugelkopf (6) angepaßten sphärischen Boden (11) aufweist.

2. Seitenhalterung nach Anspruch 1, **dadurch gekennzeichnet, daß** die Ausnehmung (10) eine Länge aufweist, die im wesentlichen dem um die Länge des zylindrischen Absatzes (5) vermehrten Durchmesser des Kugelkopfes (6) entspricht.

3. Seitenhalterung nach Anspruch 2, **dadurch gekennzeichnet, daß** daß die Öffnung (13) als Schlitz ausgebildet ist, der einen vom freien Ende des zweiten Verschlußteiles (2) bis über den Boden (11) hinausreichenden ersten Abschnitt, dessen Breite dem Durchmesser des Ansatzes (5) entspricht und dessen Länge größer als die Länge des Ansatzes (5) ist, und einen daran anschließenden zweiten Abschnitt aufweist, dessen Breite dem Durchmesser des Kugekopfes (6) angepaßt ist.

4. Seitenhalterung nach Anspruch 3, **dadurch gekennzeichnet, daß** der zweite Abschnitt der Öffnung (13) von außen betrachtet oval gestaltet ist.

5. Seitenhalterung nach einem der Ansprüche 1 bis 4, **dadurch gekennzeichnet, daß** die Ausnehmung (10) teilweise von einer Schrägfläche (12) begrenzt ist, die von der Seite der Klemmhülse (8) sowie der Außenseite zum sphärischen Boden (11) verläuft.

6. Seitenhalterung nach Anspruch 5, **dadurch gekennzeichnet, daß** die Schrägfläche (12) im Querschnitt entsprechend dem Durchmesser des Kugelkopfes (6) konkav gekrümmt ist.

7. Seitenhalterung nach einem der Ansprüche 1 bis 6, **dadurch gekennzeichnet, daß** der sphärische Boden (11) mit einer reibungsarmen Auflage, vorzugsweise aus Polyethylenterephthalat versehen ist.

## Claims

1. A side fastener for a tire chain comprising a steel cable (3), to both ends of which a clasp member (1, 2) is attached, which clasp members are interlockable and the steel cable forms, in the locked state of said clasp members, a loop surrounding a cheek of a tire, the first clasp member (1) being substantially axially symmetrical about the core (7) of said steel cable (3), whilst the second clasp member (2) has a recess (10) which is substantially axially symmetrical about the core (7) of said steel cable (3) and is adapted to fit said first clasp member (1), which second clasp member is externally accessible through an opening (13) shaped to match the longitudinal cross-section of said first clasp member (1), **characterized in that** said first clasp member (1) includes a cylindrical neck (5) which is connected to a collet (4) and adjoins a spherical head (6) and said recess (10) in said second clasp member (2) has a spherical base portion (11) adapted to fit said spherical head (6).

2. A side fastener as defined in claim 1, **characterized in that** said recess (10) has a length equal to the diameter of the spherical head (6) plus the length of said cylindrical neck (5).

3. A side fastener as defined in claim 2, **characterized in that** said opening (13) is in the form of a slot having a first region extending from the free end of said second clasp member (2) to beyond said base portion (11) thereof and having a width equal to the diameter of said neck (5) and a length which is greater than the length of said neck (5), and an adjoining second region whose width is adapted to match the diameter of said spherical head (6).

4. A side fastener as defined in claim 3, **characterized in that** said second region of said opening (13) has an oval shape when viewed from outside.

5. A side fastener as defined in any one of claims 1 to 4, **characterized in that** said recess (10) is delimited, in part, by an inclined surface (12) extending from the external surface in the vicinity of collet (8) to said spherical base portion (11).

6. A side fastener as defined in claim 5, **characterized in that** said inclined surface (12) has a concave cross-sectional form corresponding to the diameter of said spherical head (6).

7. A side fastener as defined in any one of claims 1 to 6, **characterized in that** said spherical base portion (11) is coated with a low-friction material, preferably polyethylene terephthalate.

## Revendications

1. Connexion latérale pour chaîne anti-patinage, constituée d'un câble en acier (3), aux deux extrémités duquel est fixée respectivement une partie de fermeture (1, 2), les parties de fermeture pouvant être accrochées l'une à l'autre, et le câble en acier, à l'état accroché, étant fermé pour former un anneau situé sur un flanc latéral d'un pneu, la première partie de fermeture (1) étant conçue sensiblement en symétrie de révolution autour de l'âme (7) du câble en acier (3) et la seconde partie de fermeture (2) comprenant un évidement (10) sensiblement en symétrie de révolution autour de l'âme (7) du câble en acier (3)et adapté à la première partie de fermeture (1), lequel évidement est accessible de l'extérieur par une ouverture (13) formée de manière correspondante à la coupe longitudinale de la première partie de fermeture (1), **caractérisée en ce que** la première partie de fermeture (1) est conçue avec une saillie (5) cylindrique reliée à une douille de serrage (4) et une tête sphérique (6) raccordée à ladite saillie, et l'évidement (10) comprend, dans la seconde partie de fermeture (2), un corps sphérique (11) adapté à la tête sphérique (6).

2. Connexion latérale selon la revendication 1, **caractérisée en ce que** l'évidement (10) comprend une longueur qui correspond sensiblement au diamètre de la tête sphérique (6) augmenté de la longueur de la saillie cylindrique (5).

3. Connexion latérale selon la revendication 2, **caractérisée en ce que** l'ouverture (13) est conçue comme une fente, qui comprend une première section parvenant de l'extrémité libre de la seconde partie de fermeture (2) par-dessus la partie inférieure (11), section dont la largeur correspond au diamètre de la saillie (5) et dont la longueur est supérieure à la longueur de la saillie (5), et une seconde section raccordée à celle-ci, dont la largeur est adaptée au diamètre de la tête sphérique (6).

4. Connexion latérale selon la revendication 3, **caractérisée en ce que** la seconde section de l'ouverture (13) est formée de façon ovale en l'observant de l'extérieur.

5. Connexion latérale selon l'une des revendications 1 à 4, **caractérisée en ce que** l'évidement (10) est limité en partie par une surface oblique (12), qui s'étend depuis le côté de la douille de serrage (8) ainsi que du côté extérieur en direction de la partie inférieure sphérique (11).

6. Connexion latérale selon la revendication 5, **caractérisée en ce que** la surface oblique (12) en section transversale est courbée de façon concave selon le diamètre de la tête sphérique (6).

7. Connexion latérale selon l'une des revendications 1 à 6, **caractérisée en ce que** la partie inférieure sphérique (11) est pourvue d'un support présentant un minimum de frottement, de préférence en polyéthylènetéréphtalate.
